# EUROPÄISCHE PATENTSCHRIFT

(11) **EP 2 135 762 B1**
(45) Veröffentlichungstag und Bekanntmachung des Hinweises auf die Patenterteilung: **04.09.2013**
(21) Anmeldenummer: 09007500.3
(22) Anmeldetag: 06.06.2009
(51) Int. Cl.: B60J 7/057, B60J 7/12, B62D 21/00, B62D 25/20

(54) **Betätigungssystem zur Betätigung unterschiedlicher Baugruppen eines Cabriolet-Fahrzeugs**
Actuation system for actuating different components of a convertible vehicle
Système d'actionnement destiné à l'actionnement de différents composants d'un véhicule cabriolet

(30) Priorität: 19.06.2008 DE 102008029278
(43) Veröffentlichungstag der Anmeldung: 23.12.2009
(73) Patentinhaber: Wilhelm Karmann GmbH, 49084 Osnabrück (DE)
(72) Erfinder: Wegert, Friedrich, 49086 Osnabrück (DE); Bunsmann, Winfried, 49143 Bissendorf (DE); Piepenbrink, Andreas, Dr., 82031 Grünwald (DE); Esselmann, Christof, 48356 Nordwalde (DE)
(74) Vertreter: Kronthaler, Schmidt & Coll.

(56) Entgegenhaltungen:
- EP-B1- 0 955 228
- DE-A1-102004 006 252
- DE-A1-102006 021 939
- DE-B3- 10 347 366

## Beschreibung

Die Erfindung betrifft eine Anordnung nach der im Oberbegriff des Patentanspruches 1 näher definierten Art.

Moderne Cabriolet-Fahrzeuge verfügen häufig über komplexe elektrohydraulische und elektrische Systeme zur Betätigung eines Verdecks und von durch eine Verdeckbewegung beeinflussten Fahrzeugkomponenten sowie zur Wahrnehmung weiterer in der Regel Sicherheits- und Komfortanforderungen dienenden Funktionen.

Ein geeignetes Verfahren zur Bedienung eines elektrohydraulischen Betätigungssystems insbesondere zum Verstellen eines Cabrioletverdecks ist beispielsweise in der deutschen Patentanmeldung DE 10 2006 021 939 A1 offenbart.

Des Weiteren ist es bekannt, beispielsweise ein Hydrauliksystem oder eine elektrische Aktuatorik bei dem Cabriolet zur Reduktion von Schwingungen, wie sie etwa durch das Überfahren von unebenen Fahrbahnen in der Karosserie angeregt werden, einzusetzen. Ein hydraulisches Schwingungsreduktionssystem ist z. B. in der EP 0 955 228 B1 und in der DE 103 47 366 B3 beschrieben. Die in diesen Patentschriften offenbarten Systeme stellen aktive Schwingungsreduktionssysteme dar, welche durch aktive hydraulische Stellglieder in den hinteren Diagonalstreben des Cabriolet-Fahrzeugs gegenphasige Karosserieschwingungen erzeugen, um straßenerregte Schwingungen zu kompensieren.

Diese unterschiedlichen Funktionen dienenden elektrischen oder hydraulischen Systeme stellen bei aus der Praxis bekannten Cabriolet-Fahrzeugen separate, den jeweiligen Funktionalitäten bzw. zu betätigenden Baugruppen zugeordnete Einheiten mit eigenen elektrischen Steuergeräten, eigenen Druckmittelquellen und unterschiedlichen Volumenströmen dar, womit zur Betätigung unterschiedlicher Baugruppen eines Cabriolet-Fahrzeugs mehrere autarke Systemeinheiten mit entsprechend großem Aufwand und Bauraumbedarf bereitgestellt werden müssen.

Die DE 10 2004 006 252 A1 offenbart ein Vorrichtung zur Fixierung einer geschlossenen Tür eines Kraftfahrzeugs. Bei Cabrios kann ein Verstellmechanismus zur Vorspannung der Tür mit einer hydraulischen Druckkolbeneinheit ausgebildet sein, welche zur Bewegung eines Verdecks vorgesehen ist.

Es ist Aufgabe der vorliegenden Erfindung, ein Betätigungssystem zur Betätigung einer Baugruppe von bei einer Verdeckbewegung beteiligten Fahrzeugkomponenten und wenigstens einer weiteren Baugruppe eines Cabriolet-Fahrzeugs zu schaffen, welches möglichst einfach unter Nutzung synergetischer Effekte zwischen den elektrischen Betätigungseinheiten der unterschiedlichen elektrisch betätigbaren Baugruppen ausgebildet ist.

Diese Aufgabe wird bei einer Anordnung mit einem Betätigungssystem zur Betätigung unterschiedlicher Baugruppen eines Cabriolet-Fahrzeugs der eingangs genannten Art gemäß den Merkmalen des kennzeichnenden Teils des Patentanspruches 1 gelöst.

Vorteilhafte Weiterbildungen einer Anordnung nach der Erfindung ergeben sich aus den Unteransprüchen,

Das Betätigungssystem nach der Erfindung, bei dem ein Verdecksteuergerät mit einer - im Unterschied zu beispielsweise hydraulischen Massetilgern - aktiven Schwingungsreduktionseinrichtung kombiniert wird, zeichnet sich in vorteilhafter Weise durch eine geringe Bauteilanzahl, entsprechende Blauraumvorteile und geringe Bereitstellungskosten sowie eine signifikante Energieersparnis aus.

Es hat sich gezeigt, dass sich gerade bei der Kombination der bei einer Verdeckbetätigung beteiligten Bauteilgruppe und der der aktiven Schwingungsreduktion dienenden Bauteilgruppe hinsichtlich ihrer Ansteuerung überraschend hohe Synergieeffekte ergeben. Bei der Zusammenfassung einer elektrischen Einheit zur Betätigung von bei einer Verdeckbewegung involvierten Fahrzeugkomponenten und einer elektrischen Einheit zur aktiven Schwingungsreduktion des Fahrzeugs können ohnehin für eine Verdeckbetätigung vorhandene Komponenten mit geringem Aufwand zur Wahrnehmung der mit der aktiven Schwingungsreduktion verbundenen Aufgaben modifiziert werden, da die Betätigung beider Baugruppen vergleichbar ist.

Mit der Erfindung ist eine aktive Schwingungsreduktionseinrichtung ohne größere zusätzliche Herstellungskosten und mit nur geringfügig höherem Gewicht und größeren Bauraum bei einem Cabriolet-Fahrzeug realisierbar,

Unter dem Begriff "Cabriolet-Fahrzeug" sind im Rahmen der Erfindung in erster Linie Fahrzeuge zu verstehen, bei denen das Verdeck vollständig abgelegt werden kann und in geöffneter Verdeckposition in einem Bereich oberhalb der Fahrzeugbrüstung keine Verdeckelemente oder Rahmenelemente heckwärts einer Windschutzscheibenbegrenzung verbleiben, so dass insbesondere in Kombination mit abgesenkten Seitenscheiben ein ungestörtes "Cabrio-Gefühl" für Fahrzeuginsassen erreichbar ist. Gleichwohl kann die Erfindung auch auf cabrioletartige Fahrzeuge Anwendung finden, bei denen im geöffneten Verdeckzustand, wie z. B. bei einem Rolldach, Rahmenelemente oberhalb der Fahrzeugbrüstung verbleiben oder bei denen nur eine teilweise Dachöffnung, insbesondere in der Art eines Targa-Fahrzeugs, erzielbar ist.

Das Verdeck kann dabei als ein so genanntes Soft-Top mit einem flexiblen, insbesondere textilen Verdeckbezug oder als ein so genanntes Hart-Top mit formstabilen Dachelementen ausgebildet sein.

Grundsätzlich ergeben sich die vorgenannten Vorteile der Erfindung sowohl bei einer Ausführung der Erfindung mit einem elektrischen Betätigungssystem, bei dem die bei der Verdeckbewegung beteiligten Fahrzeugkomponenten, zu denen neben dem Verdeck selbst auch eine Verdeckkastendeckel oder Heckdeckel, Gestängeklappen etc. zählen können, und die der aktiven Reduktion von Karosserieschwingungen dienenden Fahrzeugkomponenten elektrisch mit einem rein elektrischen Betätigungssystem für beide Baugruppen, welches beispielsweise mit Piezo-Aktuatoren ausgebildet ist, betätigbar sind. Die Zusammenfassung elektrischer und elektronischer Komponenten beider Baugruppen, insbesondere ein gemeinsames elektronisches Steuergerät, bewirkt einen großen Einspareffekt.

Gemäß einer besonders zweckmäßigen Ausgestaltung der Erfindung ist die gemeinsame Betätigungseinheit für die Baugruppe der bei einer Verdeckbewegung involvierten Fahrzeugkomponenten und die Baugruppe der der aktiven Reduktion von Karosserieschwingungen dienenden Fahrzeugkomponenten über eine ODER-Schaltung mit den beiden Baugruppen verknüpft. Das heißt, entweder wird das aktive Schwingungsreduktionssystem oder die Verdeckmechanik betätigt. Eine solche ODER-Schaltung ist in der Regel ausreichend, da die Betätigung des Verdecks normalerweise nur bei stehendem Fahrzeug oder sehr geringer Fahrzeuggeschwindigkeit durchgeführt wird.

Das elektrische Betätigungssystem nach der Erfindung kann in vorteilhaften Weiterbildungen auch die Betätigung weiterer Baugruppen an Fahrzeugkomponenten, z. B. die Betätigung von elektrisch betätigbaren Komfortsystemen wie beispielsweise eine Heckdeckelfernbetätigung, umfassen.

Weitere Vorteile und vorteilhafte Ausführungen eines Betätigungssystems eines Cabriolet-Fahrzeug zur Betätigung einer Baugruppe von bei einer Verdeckbewegung beteiligten Fahrzeugkomponenten und einer Baugruppe von der aktiven Reduktion von Karosserieschwingungen und der Verbesserung der Fahrdynamik dienenden Fahrzeugkomponenten gemäß der Erfindung ergeben sich aus der Zeichnung und der Beschreibung.

Nachfolgend sind ein nicht von der Erfindung umfasstes Ausführungsbeispiel mit einer gemeinsamen elektrohydraulischen Betätigungseinheit und ein erfindungsgemäßes vorteilhaftes Ausführungsbeispiel der Erfindung mit einer gemeinsamen elektrischen Betätigungseinheit anhand der Zeichnung prinzipmäßig beschrieben.

Es zeigt:
- Fig. 1: eine stark vereinfachte dreidimensionale Darstellung eines Cabriolet-Fahrzeugs mit einem Verdeck, welches sich in einer einen Fahrgastraum schließenden Position befindet, und einem aktiven Schwingungsreduktionssystem zur Reduktion von Karosserieschwingungen und zur Verbesserung der Fahrdynamik, wobei zur Verdeckbetätigung und zur Betätigung des Schwingungsreduktionssystems ein gemeinsames elektrohydraulisches Betätigungssystem vorhanden ist;
- Fig. 2: eine Detailansicht des Bereiches X in Fig. 1 mit einem Verdeckhauptlager und einer an einem Verdeckgestänge des Verdecks zu dessen Betätigung angreifenden Zylinder-Kolben-Einheit;
- Fig. 3: ein stark vereinfachtes Blockdiagramm mit einer Systemdarstellung des in Fig. 1 dargestellten kombinierten elektrohydraulischen Betätigungssystems zur Betätigung der Baugruppe der in eine Verdeckbewegung involvierten Fahrzeugkomponenten und zur Betätigung der Baugruppe des aktiven Schwingungsreduktionssystems;
- Fig. 4: einen beispielhaften hydraulischen Schaltplan des elektrohydraulischen Betätigungssystems der Fig. 3;
- Fig. 5: ein Blockschaltbild einer weiteren Ausführung des elektrohydraulischen Betätigungssystems der Fig. 3, welches weitgehend dem hydraulischen Schaltplan der Fig. 4 entspricht; und
- Fig. 6: ein Blockschaltbild eines elektrischen Betätigungssystems zur Betätigung der Baugruppe der bei einer Verdeckbewegung beteiligten Fahrzeugkomponenten und zur Betätigung der Baugruppe des aktiven Schwingungsreduktionssystems.

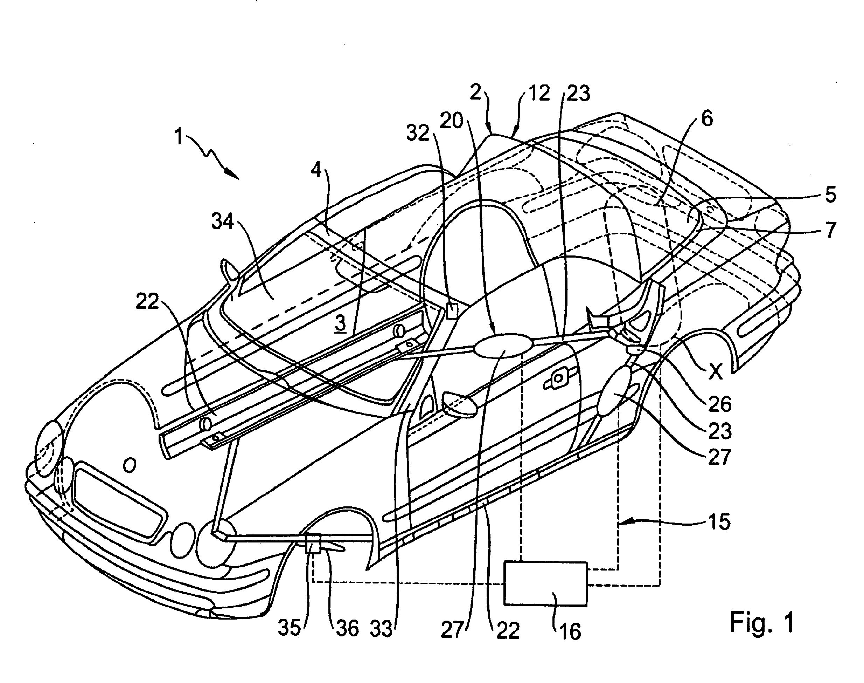

Bezug nehmend auf Fig. 1 ist ein stark vereinfachtes Cabriolet-Fahrzeug 1 dargestellt, welches vorliegend ein als Soft-Top ausgebildetes Verdeck 2 aufweist, welches mit einem in Fig. 1 nur teilweise ersichtlichen Verdeckbezug 5 ausgebildet ist, in welchen in einem Heckbereich eine Heckscheibe 6 eingebunden ist.

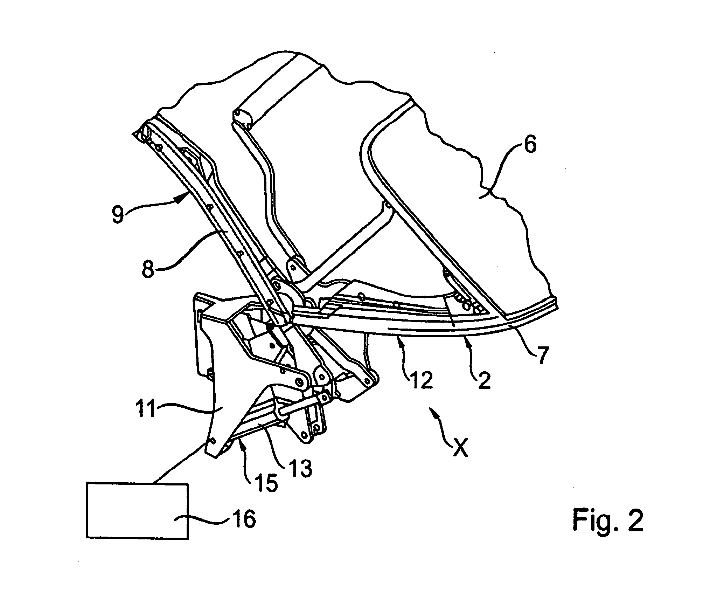

Der Verdeckbezug 6 ist in einem Fahrzeugheckbereich an einem Stoffhaltebügel 7 festgelegt, wie dies in der von dem Verdeckbezug freigestellten Darstellung der Fig. 2 zu erkennen ist, und umspannt die Dachteile des Verdecks 2 zwischen jeweils diesen Dachteilen zugeordneten, paarweise symmetrisch gegenüberliegend zu der Fahrzeugmittellängsachse angeordneten und die Ränder der Dachteile bildenden äußeren Dachrahmenprofilen 8, wobei die Dachteile und die Dachrahmenprofile 8 Teile eines Verdeckgestänges 9 darstellen.

Das Verdeck 2 ist zwischen einer in Fig. 1 dargestellten ersten Endlage, in welcher das Verdeck 2 einen Fahrgastraum 3 überdeckt und an einer Windschutzscheibenbegrenzung 4 festgelegt ist, und einer zweiten Endlage, in der das Verdeck 2 geöffnet in einem heckseitigen Ablagebereich abgelegt ist, verfahrbar, wobei hier eine bei der Verdeckbewegung bewegte, in Fig. 2 näher gezeigte Baugruppe 12 bestehend aus dem Verdeck 2 mit seinem Verdeckgestänge 9, dem Stoffhaltebügel 7, einer so genannten Hutablage und einem nicht näher dargestellten Deckel eines Verdeckkastens von einer an einem Hauptlager 11 abgestützten Zylinder-Kolben-Einheit 13 einer elektrohydraulischen Betätigungseinheit 15 antreibbar ist.

Die elektrohydraulische Betätigungseinheit 15 ist mit einem nur symbolisch angedeuteten elektronischen Steuergerät 16 zur Steuerung einer Verdeckbewegung ausgebildet.

Wie in der Fig. 1 ebenfalls prinzipmäßig dargestellt ist, ist zur Kompensation eines fehlenden starren Daches bei dem Cabriolet-Fahrzeug 1 und einer Vermeidung von hierdurch auftretenden straßen- oder fahrzustandsabhängigen Schwingungen in der karosserie ein so genanntes aktives Schwingungsreduk tionssystem ASRS vorgesehen, dessen Baugruppe 20 mit der Karosserie verbundene Biegestabilisatoren 22 und Torsionsstabilisatoren 23 und 35 umfasst, wobei die Biegestabilisatoren 22 als verstärkte Längsschweller ausgebildet sind, die unterhalb von Türöffnungen verlaufen. Die vorderen Torsionsstabilisatoren 35 sind vorliegend als passive Verstärkungsstreben ausgebildet, die einerseits an den Längsschwellern 22 und andererseits an einem vorderen, nicht näher dargestellten Abstützpunkt angreifen. Die fahrzeugheckseitigen Torsionsstabilisatoren 23 greifen einerseits ebenfalls an den Längsschwellern 22 an, während ihre rückwärtige Verankerung an einem Abstützblech 26 vorgesehen ist, welches vorliegend eine Einheit mit dem Hauptlager 11 des Verdecks 2 bildet.

Die hinteren Torsionsstabilisatoren 23 weisen über einen Teil ihrer Längserstreckung hydraulische Aktuatoren 27 auf, welche im weitesten Sinne eine Zylinder-Kolben-Einheit darstellen. So können die hydraulischen Aktuatoren 27 z. B. als Schlauchaktuatoren ausgebildet sein, die weder eine nennenswerte Drucksteifigkeit noch eine nennenswerte Knicksteifigkeit besitzen und sich bei Beaufschlagung ihres Innenraums mit einem Hydraulikmedium im Durchmesser erweitern und gleichzeitig zwischen ihren Anbindungspunkten verkürzen.

Die hydraulischen Aktuatoren 27 werden von derselben elektrohydraulischen Betätigungseinheit 15 angesteuert, welche auch zur Steuerung einer Verdeckbewegung eingesetzt wird. In einem Grundbetriebszustand des Cabriolet-Fahrzeugs 1 werden die hydraulischen Aktuatoren 27 von der elektrischen Steuereinheit 16 der elektrohydraulischen Betätigungseinheit 15 so mit einem Hydraulikmedium beaufschlagt, dass sie eine mittlere Zugvorspannung zwischen ihren Anbindungspunkten an den Längsschwellern 22 und dem Abstützblech 26 hervorrufen.

Zur Verhinderung von Torsionen der Karosserie des Cabriolet-Fahrzeugs 1 wird diese Vorspannung im Betrieb teilweise abgebaut oder vergrößert, um auf die Karosserie einwirkende Kräfte zu kompensieren. Dabei ergeben sich Längenveränderungen der hinteren Torsionsstabilisatoren 23 maximal im Millimeterbereich, womit sowohl im dynamischen als auch im statischen Bereich Torsionen der Karosserie des Cabriolet-Fahrzeugs 1 weitestgehend verhindert werden können.

Die Ansteuerung der hydraulischen Aktuatoren 27 des aktiven Schwingungsreduktionssystems mit dem Hydraulikmedium erfolgt in Abhängigkeit von Beschleunigungssensoren 21, die ein Störsignal im Bereich von Achsschenkeln 36 in vertikaler Richtung erfassen. Typischerweise sind im Bereich der Achsschenkel 36 aller vier Räder Beschleunigungssensoren 21 vorgesehen. Weiterhin erfasst ein Sensor 32 im Bereich des oberen Endes von A-Säulen 33 bzw. am oberen Rand einer Windschutzscheibe 34 verbleibende Querschwingungen der Karosserie als Rückkopplungssignal, wodurch Torsionen im dynamischen Bereich beherrschbar sind. Für statische Torsionen ist ein zusätzlicher nicht dargestellter Sensor, beispielsweise ein Dehnungssensor, an einem durch Torsionen der Karosserie beanspruchten Blech vorgesehen.

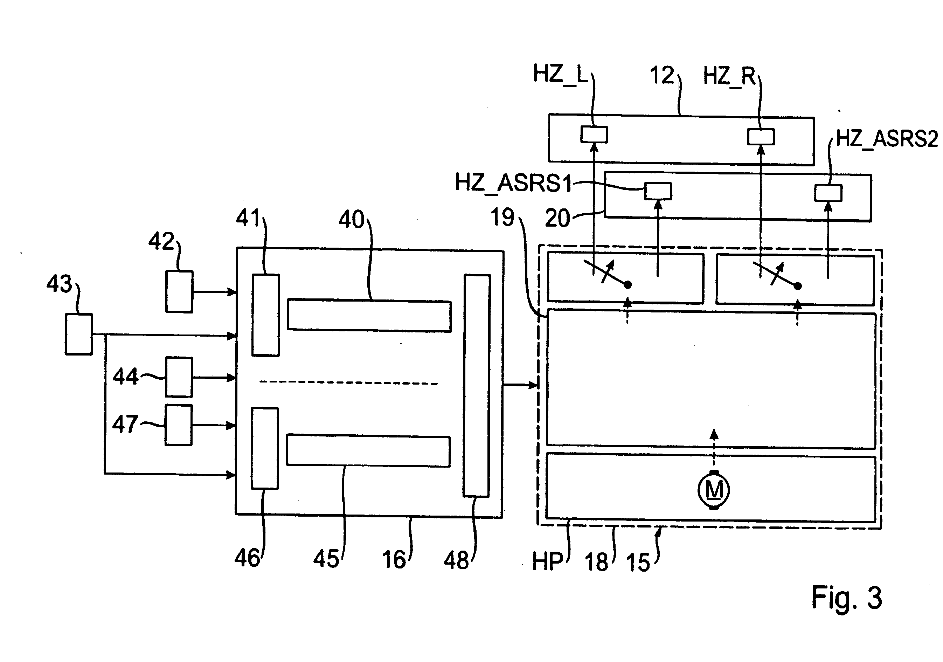

Bezug nehmend auf Fig. 3 ist ein Blockdiagramm mit einer Systemdarstellung des in Fig. 1 ersichtlichen kombinierten elektrohydraulischen Betätigungssystems zur Betätigung der Baugruppe 12 der in eine Verdeckbewegung involvierten Fahrzeugkomponenten 2, 7, 8, 9, 11 und zur Betätigung der Baugruppe 20 des aktiven Schwingungsreduktionssystems gezeigt.

Darin ist symbolisch als Block das kombinierte elektronische Steuergerät 16, welches sowohl zur Steuerung des Verdecks 2 als auch zur Regelung des aktiven Schwingungsreduktionssystems ASRS dient, sowie als weiterer Block ein hydraulisches Schaltgerät 18 der elektrohydraulischen Betätigungseinheit 15, welches der hydraulischen Betätigung sowohl der Baugruppe 12 des Verdecks 2 als auch der Baugruppe 20 des aktiven Schwingungsreduktionssystems dient, dargestellt.

An dem elektronischen Steuergerät 16 sind für eine Steuereinheit 40 zur Steuerung des Verdecks 2 Eingänge 41 vorgesehen, welche mit einer Sensorik 42 des Verdecks, mehreren nur symbolisch dargestellten relevanten Schnittstellen 43 des Cabriolet-Fahrzeugs 1 sowie mit einem CAN-Fahrzeugbus 44 verbunden sind.

Für eine dem aktiven Schwingungsreduktionssystem zugeordnete Regelungseinheit 45 sind weiterhin Eingänge 46 vorgesehen, welche ebenfalls mit dem CAN-Bus 44, einer Sensorik 47 des Fahrzeugs und den weiteren Schnittstellen 43 des Fahrzeugs verbunden sind.

Von der Steuereinheit 40 für das Verdeck 2 bzw. für die bei einer Verdeckbewegung beteiligte Baugruppe 12 sowie für die Regelungseinheit 45 des aktiven Schwingungsreduktionssystems sind an dem elektronischen Steuergerät 16 Ausgänge 48 vorgesehen, welche zu dem hydraulischen Schaltgerät 18 führen.

Das hydraulische Schaltgerät 18 ist mit einer Hydraulikpumpe HP und einem Block 19 von druckgesteuerten Hydraulikventilen ausgebildet, welche wahlweise mittels einer ODER-Schaltung hydraulisches Arbeitsmedium entweder an die Bauteilgruppe 12 des Verdecks 2, von der in Fig. 3 ein Hydraulikzylinder HZ_L einer einer linken Fahrzeugseite zugeordneten Hauptsäule des Verdecks 2 und ein Hydaulikzylinder HZ_R einer einer rechten Fahrzeugseite zugeordneten Hauptsäule des Verdecks 2 dargestellt sind, oder an die Bauteilgruppe 20 des aktiven Schwingungsreduktionssystems ASRS, von der in der Fig. 3 ein erster Hydraulikzylinder HZ_ASRS1 und ein zweiter Hydraulikzylinder HZ_ASRS2 symbolisch gezeigt sind, führen.

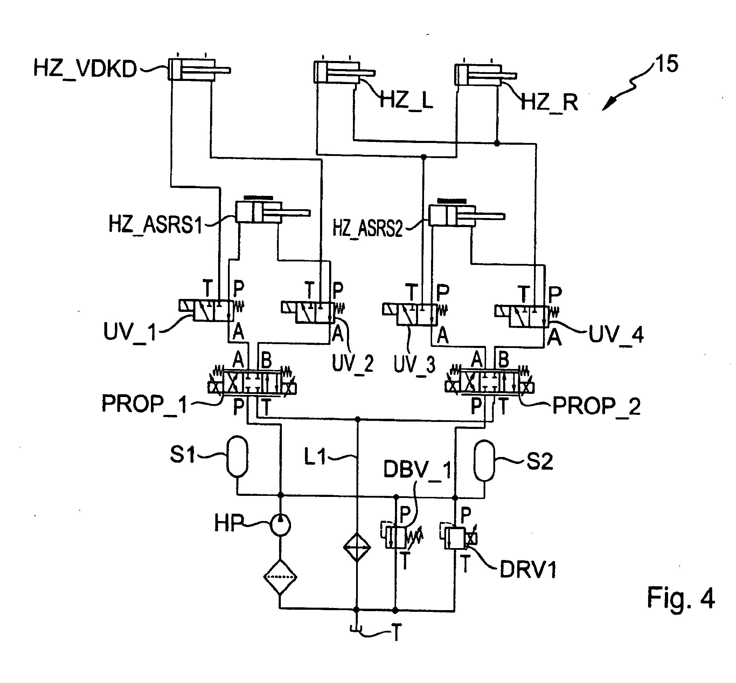

Die Fig. 4 zeigt einen hydraulischen Schaltplan einer vorteilhaften Ausführung elektrohydraulischen Betätigungssystems der Fig. 1 und Fig. 3, bei dem die hydraulischen Komponenten von dem kombinierten elektronischen Steuergerät 16 betätigbar sind.

Dabei ist ersichtlich, dass die zu den Gleichteilkomponenten der elektrohydraulischen Betätigungseinheit 15 zählende Hydraulikpumpe HP, welche elektrisch angetrieben wird, um eine Verdeckverstellung auch bei Fahrzeugstillstand zu ermöglichen, aus einem hydraulischen Druckmitteltank T ein Hydraulikfluid fördert.

Die Pumpe HP erzeugt dabei mittels eines Druckbegrenzungsventils DBV_1 einen Druck von beispielsweise 180 bar in einer zu Proportionalventilen PROP_1 und PROP_2 führenden Leitung L_1, wobei der Druck durch ein Druckregelventil DRV_1 servomäßig geregelt sowie über Speicher S_1 und S_2 geglättet wird.

Der Druck in der Leitung L_1 liegt als Versorgungsdruck an den Proportionalventilen PROP_1 und PROP 2 an, von denen das erste Proportionalventil PROP_1 zu einem Hydraulikzylinder HZ_VDKD einer Hauptsäule eines Verdeckkastendeckels führt und das zweite Proportionalventil PROP_2 zu dem Hydraulikzylinder HZ_L einer einer linken Fahrzeugseite zugeordneten Hauptsäule des Verdecks sowie zu dem Hydraulikzylinder HZ_R einer einer rechten Fahrzeugseite zugeordneten Hauptsäule des Verdecks führt.

Bei der in Fig. 3 gezeigten Ausführung sind die Proportionalventile PROP_1 und PROP 2 als reine Wegeventile ausgebildet, welche proportional einen über die Schieberposition vorgegebenen Volumenstrom und somit einen Verstelldruck für sämtliche Systemdruckzylinder erzeugen.

Den Proportionalventilen PROP_1 und PROP 2 nachgeschaltete Umschaltventile UV_1, UV_2, UV_3, UV_4, UV_5 und UV_6 dienen zum Umschalten zwischen einer Druckbeaufschlagung der Verdeckkomponenten und der Fahrzeugkomponenten des aktiven Schwingungsreduktionssystems ASRS, wobei die Umschaltventile UV_1, UV_2, UV_3, UV_4, UV_5 und UV_6 in Ruhestellung zur Druckbeaufschlagung von Zylindern HZ_ASRS_1 und HZ_ASRS_2 des aktiven Schwingungsreduktionssystems ASRS geschaltet sind und somit nicht ständig angesteuert sind.

Erst im Falle einer Anforderung einer Verdeckbetätigung werden die Umschaltventile UV_1, UV_2, UV_3, UV_4, UV_5 und UV_6 zur Freigabe eines Hydraulikmittelstroms an die Zylinder HZ_L, HZ_R und HZ_VDKD des Dachsystems angesteuert.

Neben der gezeigten kontinuierlichen Druckansteuerung der Systemzylinder über Proportionalventile ist selbstverständlich in weiteren Ausführungen auch eine einfachere Standartvolumenstromsteuerung mit entsprechenden Blendendrosseln zur Umschaltung der Druckversorgung zwischen den Baugruppen des Verdecks und des aktiven Schwingungsreduktionssystems denkbar.

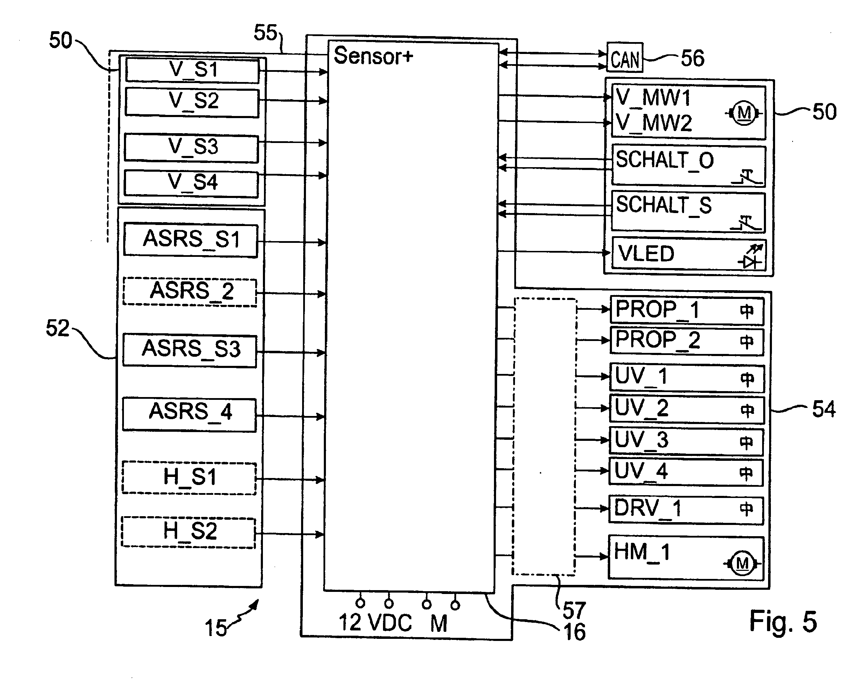

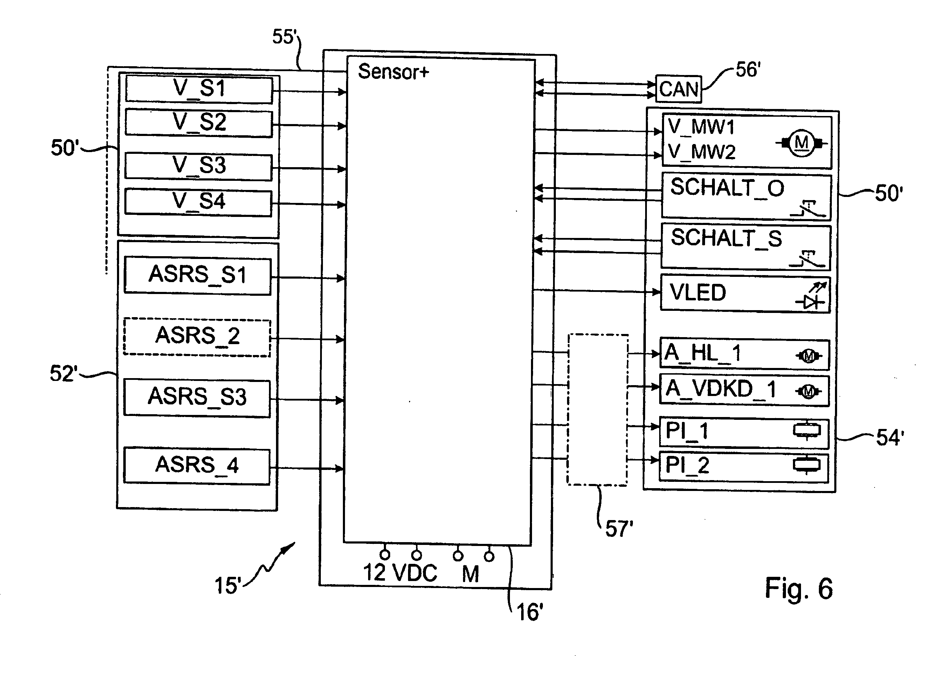

In Fig. 5 und Fig. 6 sind gegenüberstellend Ausführungen mit einer hydraulischen Betätigung sowohl des aktiven Schwingungsreduktionssystems ASRS als auch der Baugruppe 12 des Verdecks 2 (Fig. 5) und eine elektrische Betätigung sowohl des aktiven Schwingungsreduktionssystems ASRS als auch der bei einer Verdeckbewegung beteiligten Baugruppe 12 (Fig. 6) gezeigt, wobei jeweils mit Blöcken 50 bzw. 50' die rein der Baugruppe 12 des Verdecks 2 zugeordneten Komponenten, mit Blöcken 52 bzw. 52' die nur dem aktiven Schwingungsreduktionssystem zugeordneten Komponenten und mit einem Block 54 bzw. 54' die gemeinsam genutzten Komponenten dargestellt sind.

Bezug nehmend auf das das Hydrauliksystem abbildende Blockschaltbild der Fig. 5 ist das elektronische Steuergerät 16 ersichtlich, welches eine Schnittstelle zu einem Hallsensor V_S1, welcher einen geöffneten Zustand eines Verdeckkastendeckels detektiert, eine Schnittstelle zu einem weiteren Hallsensor V_S2, welcher einen geschlossenen Zustand eines Verdeckkastendeckels detektiert, eine Schnittstelle zu einem weiteren Hallsensor V_S3, welcher einen verriegelten Zustand des Verdeckkastendeckels detektiert, und eine Schnittstelle zu einem Drehwinkelsensor V_S4 einer Hauptsäule des Verdecks 2 aufweist.

Diese Signale an das elektronische Steuergerät 16 ausgebenden Sensoren V_S1, V_S2, V_S3 und V_S4 zählen alle zu den Komponenten 50, welche rein der Baugruppe 12 der bei einer Verdeckbewegung beteiligten Fahrzeugkomponenten zugeordnet sind.

Weitere nur der Baugruppe 12 des Verdecks 2 zugeordnete Komponenten 50, mit denen das Steuergerät 16 kommuniziert, sind eine erste Motorwicklung einer Verdeckverriegelung V_MW1 und eine zweite Motorwicklung einer Verdeckverriegelung MW2, welche Signale von dem elektronischen Steuergerät 16 erhalten, ein Signale an das Steuergerät 16 ausgebender widerstandskodierter Bedienschalter Schalt_O zum Verdecköffnen und ein widerstandskodierter Bedienschalter Schalt_S zum Verdeckschließen sowie eine eine Verdeckbetätigung anzeigende LED, welche in Fig. 5 mit V_LED bezeichnet ist.

Als rein dem aktiven Schwingungsreduktionssystem ASRS zugeordnete Fahrzeugkomponenten 52 sind in der Fig. 5 ein Beschleunigungssensor ASRS_S1 der A-Säule 33 des Fahrzeugs, ein optionaler Beschleunigungssensor ASRS_S2 in einem Fahrzeugsitz, ein erster Wegsensor ASRS_S3 in einem Zylinder des aktiven Schwingungsreduktionssystems und ein zweiter Wegsensor ASRS_S4 eines weiteren Zylinders des aktiven Schwingungsreduktionssystems dargestellt.

Darüber hinaus können optional als nur dem aktiven Schwingungsreduktionssystems zugeordnete Komponenten 52 ein Sensor H_S1, welcher einen Hauptdruck der Hydraulik sensiert sowie ein Sensor H_S2, welcher eine Öltemperatur der Hydaulik sensiert, vorgesehen sein, deren Signale als Eingangssignale an das Steuergerät 16 ausgegeben werden.

Die gemeinsam von der Baugruppe 12 des Verdecks 2 und der Baugruppe 20 des aktiven Schwingungsreduktionssystems genutzten Komponenten 54 umfassen neben dem Steuergerät 16, welches über einen Anschluss zu einem Spannungsversorgungsschalter 55 und CAN-Bus 56 des Fahrzeugs sowie Last/Logik-Anschlüsse an eine 12VDC-Spannungsquelle und eine Masse M aufweist, das in der Fig. 4 ersichtliche erste Proportionalventil PROP_1, das zweite Proportionalventil PROP_2, das erste Umschaltventil UV_1, das zweite Umschaltventil UV_2, das dritte Umschaltventil UV_3, das vierte Umschaltventil UV_4, das Druckregelventil DRV_1 und einen Antrieb der Hydraulik HM_1, wobei alle diese Komponenten jeweils über eine externe Leistungselektronik 57 Signale von dem elektronischen Steuergerät 16 erhalten.

Da die Ventile PROP_1, PROP_2, UV_1, UV_2, UV_3, UV_4, DRV_1 und der Antrieb der Hydraulik HM_1 ebenso wie das Steuergerät 16 Gleichteile, d. h. gemeinsam benutzte Komponenten, für das aktive Schwingungsreduktionssystem ASRS und die Verdeckbetätigung bilden, ergeben sich bei dieser Ausführung bedeutende Synergieeffekte.

Bei der in Fig. 6 gezeigten Ausführung einer gemeinsamen elektrischen Betätigungseinheit 15' sowohl des aktiven Schwingungsreduktionssystems ASRS als auch des Verdeckmechanismus sind als rein verdeckbezogene Komponenten 50', welche Signale an ein beiden Baugruppen dienendes, kombiniertes Steuergerät 16' ausgeben, wiederum der Hallsensor V_S1, welcher einen geöffneten Zustand eines Verdeckkastendeckels detektiert, der Hallsensor V_S2, welcher einen geschlossenen Zustand eines Verdeckkastendeckels detektiert, der Hallsensor V_S3, welcher einen verriegelten Zustand des Verdeckkastendeckels detektiert, und der Drehwinkelsensor V_S4 an einer Hauptsäule des Verdecks 2 dargestellt.

Weitere nur der Baugruppe 12 des Verdecks 2 zugeordnete Komponenten 50' sind die von dem Steuergerät 16' Signale erhaltende erste Motorwicklung einer Verdeckverriegelung V_MW1, die zweite Motorwicklung einer Verdeckverriegelung MW2 und die eine Verdeckbetätigung anzeigende, mit VLED bezeichnete LED sowie die Eingangssignale an das elektronischen Steuergerät 16' liefernden Bedienschalter Schalt_O zum Verdecköffnen und Schalt_S zum Verdeckschließen.

Des Weiteren sind bei der Ausführung nach Fig. 6 elektrische Aktuatoren eines Antriebs A_HL_1 des Hauptlagers 11 des Verdecks 2 und eines Antrieb A_VDKD_1 eines Verdeckkastendeckels, welche jeweils über eine externe Leistungselektronik 57' Signale von dem Steuergerät 16' erhalten, zu den nur der Baugruppe 12 des Verdecks 2 zugeordneten Komponenten 50' zu zählen.

Die nur dem aktiven Schwingungsreduktionssystem ASRS zuzurechnenden Komponenten 52' umfassen auch bei der Ausführung nach Fig. 6 den Beschleunigungssensor ASRS_S1 der A-Säule des Fahrzeugs, den optionalen Beschleunigungssensor ASRS_S2 in einem Fahrzeugsitz, den ersten Wegsensor ASRS_S3 in einem Zylinder des aktiven Schwingungsreduktionssystems und den zweiten Wegsensor ASRS_S4 eines weiteren Zylinders des aktiven Schwingungsreduktionssystems.

Darüber hinaus sind hier als nur dem aktiven Schwingungsreduktionssystems zugeordnete Komponenten 52' ein erstes Piezoelement PI_1 und ein zweites Piezoelement PI_1 ersichtlich, wobei diese elektrischen Aktuatoren jeweils über die externe Leistungselektronik 57' von dem Steuergerät 16' angesteuert werden.

Eine bedeutende beiden Systemen, nämlich dem der elektrischen Betätigung des aktiven Schwingungsreduktionssystems ASRS und der elektrischen Verdeckbetätigung, zugehörige Komponente 54' stellt hier das elektronische Steuergerät 16' dar.

Bei beiden in den Figuren 5 und 6 gezeigten Lösungen können die Schnittstellen zu den Aktuatoren des Verdecks 2 und des aktiven Schwingungsreduktionssystems ASRS als einfache Wechselanschlüsse ausgebildet sein, wobei die Schnittstellen für die der jeweiligen Baugruppe 12, 20 zugeordneten Aktuatoren physikalisch gleich sein können und nur eine digitale Umschaltung zwischen den gleichen Aktuatorikschnittstellen, d. h. nur bezüglich des Verdecks 2 oder des aktiven Schwingungsreduktionssystems ASRS, erfolgt.

Untersuchungen haben ergeben, dass die Zusatzfunktionen des aktiven Schwingungsreduktionssystems ASRS bei nur geringen Modifikationen von einem bei Verdeckantrieben gebräuchlichen elektronischen Steuergerät wahrgenommen werden können, da die zusätzlichen ASRS-Systemsensoren und die Regelalgorithmen für das aktive Schwingungsreduktionssystem die Komplexität des Steuergerätes nur geringfügig erhöhen. Der konstruktive Mehraufwand für das elektronische Steuergerät ist somit gegenüber den Synergieeffekten vernachlässigbar.

Es versteht sich, dass sämtliche beschriebenen Ausführungen nur beispielhaft sind und die aufgeführten Komponenten sowohl hinsichtlich ihrer Anzahl als auch ihrer Verknüpfung im Rahmen der Erfindung abweichend vorgesehen sein können. Dabei sind auch unterschiedliche Überschneidungsbereiche der den beiden Baugruppen 12, 20 zugehörigen jeweils elektrischen ausgeführten Komponenten möglich.

## Patentansprüche

1. Anordnung mit unterschiedlichen Baugruppen (12, 20) eines Cabriolet-Fahrzeugs (1), mit einem Betätigungssystem zu deren Betätigung, mit wenigstens einen elektrischen Betätigungseinheit, wobei in eine Verdeckbewegung involvierte Fahrzeugkomponenten (2, 7, 8, 9, 11) eine Baugruppe (12) bilden und zur aktiven Reduktion von Karosserieschwingungen dienende Fahrzeugkomponenten (23, 27, 35) eine weitere Baugruppe (20) bilden, **dadurch gekennzeichnet, dass** den unterschiedlichen Baugruppen die wenigstens eine elektrische Betätigungseinheit (15') zugeordnet ist, und
dass die Baugruppe (12) der bei einer Verdeckbewegung involvierten Fahrzeugkomponenten (2, 7, 8, 9, 11) und die Baugruppe (20) der der aktiven Reduktion von Karosserieschwingungen dienenden Fahrzeugkomponenten (23, 27, 35) gemeinsam von der wenigstens einen elektrischen Betatigungseinheit (15') betätigbar sind.

2. Anordnung nach Anspruch 1,
**dadurch gekennzeichnet,**
**dass** die Baugruppe (12) der bei einer Verdeckbewegung involvierten Fahrzeugkomponenten (2, 7, 8, 9, 11) durch eine elektrische Betätigungseinheit (15') mit einem elektrische Aktuatoren (A_HL_1, A_VDKD_1) elektronisch ansteuerndem Steuergerät (16') betätigbar ist.

3. Andordnung nach einem der vorhergehenden Ansprüche, insbesondere nach Anspruch 2,
**dadurch gekennzeichnet,**
**dass** die Baugruppe (20) der der aktiven Reduktion von Karosserieschwingungen dienenden Fahrzeugkomponenten durch eine elektrische Betätigungseinheit (15') mit einem elektrische Aktuatoren (PI_1, PI_2), insbesondere Pieao-Rktuatoren(PI_1, PI_2), elektronisch ansteuerndem Steuergerät (16') betätigbar ist.

4. Anordnung nach wenigstens einem der vorhergehenden Ansprüche,
**dadurch gekennzeichnet,**
**dass** die gemeinsame Betätigungseinheit (15') für die Baugruppe (12) der bei einer Verdeckbewegung involvierten Fahrzeugkomponenten (2, 7, 8, 9, 11) und die Baugruppe (20) der der aktiven Reduktion von Karosserieschwingungen dienenden Fahrzeugkomponenten (23, 27, 35) über eine ODER-Schaltung mit den beiden Baugruppen (12, 20) verknüpft ist.

5. Anordnung nach wenigstens einem der vorhergehenden Ansprüche,
**dadurch gekennzeichnet,**
**dass** die gemeinsame Betätigungseinheit (15') für die Baugruppe (12) der bei einer Verdeckbewegung involvierten Fahrzeugkomponenten (2, 7, 8, 9, 11) und die Baugruppe (20) der der aktiven Reduktion von Karosserieschwingungen dienenden Fahrzeugkomponenten (23, 27, 35) ein beiden Baugruppen (12, 20) zugeordnetes, kombiniertes elektronisches Steuergerät (16') aufweist.

6. Anordnung nach wenigstens einem der vorhergehenden Ansprüche,
**dadurch gekennzeichnet,**
**dass** die zur aktiven Reduktion von Karosserieschwingungen dienenden Fahrzeugkomponenten (23, 27, 35) wenigstens einen zwei Karosserieteile des Cabriolet-Fahrzeugs (1) miteinander verbindenden Torsionsstabilisator (23), welcher zur Unterdrückung von Torsionen der Karosserie von der Betätigungseinheit (15') aktiv auf Änderungen seiner Länge zwischen seinen Anbindungspunkten an der Karosserie angesteuert ist, umfassen, wobei der Torsionsstabilisator (3) vorzugsweise einen hydraulischen Aktuator (27) aufweist, der im Grundzustand des Cabriolet-Fahrzeugs (1) soweit mit Hydraulikmedium beaufschlagt ist, dass eine Zugvorspannung zwischen seinen Anbindungspunkten vorliegt, die zur aktiven Torsionsunterdrückung verringerbar und vergrößerbar ist, und wobei der hydraulische Aktuator (27) insbesondere als ein Schlauchaktuator ausgebildet ist, der sich bei Beaufschlagung seines Innenraums mit einem Hydraulikmedium im Durchmesser erweitert und gleichzeitig zwischen seinen Anbindungspunkten verkürzt.

7. Anordnung nach wenigstens einem der vorhergehenden Ansprüche,
**dadurch gekennzeichnet,**
**dass** die Baugruppe (12) der bei einer Verdeckbewegung involvierten Fahrzeugkomponenten (2, 7, 8, 9, 11) wenigstens ein zwischen einer einen Fahrgastraum (3) überdeckenden Endlage an einer Windschutzscheibenbegrenzung (4) und einer in einem heckseitigen Ablagebereich abgelegten Endlage überführbares Verdeck (2) mit Dachrahmenprofilen (8) und einem an einem Hauptlager (11) an die Karosserie angebundenen Verdeckgestänge (9) sowie vorzugsweise einen Deckel eines Verdeckkastens (VDKD) umfasst.

## Claims

1. An assembly with different subassemblies (12, 20) of a convertible vehicle (1), said assembly comprising an actuation system for their actuation, with at least one electric actuation unit, wherein vehicle components (2, 7, 8, 9, 11) involved in a hood movement form a subassembly (12) and vehicle components (23, 27, 35) serving to actively reduce vehicle body vibrations form another subassembly (20), **characterised in that** the at least one electric actuation unit (15') is assigned to the different subassemblies, and
that the subassembly (12) of the vehicle components (2, 7, 8, 9, 11) involved in a hood movement and the subassembly (20) of the vehicle components (23, 27, 35) serving to actively reduce vehicle body vibrations can be jointly actuated by the at least one electric actuation unit (15').

2. The assembly according to claim 1, **characterised in that** the subassembly (12) of the vehicle components (2, 7, 8, 9, 11) involved in a hood movement can be actuated by an electric actuation unit (15') comprising a control device (16') which electronically controls electric actuators (A_HL_1, A_VDKD_1).

3. The assembly according to one of the preceding claims, in particular according to claim 2, **characterised in that** the subassembly (20) of the vehicle components serving to actively reduce vehicle body vibrations can be actuated by an electric actuation unit (15') comprising a control device (16') which electronically controls electric actuators (PI_1, PI_2), in particular piezo actuators (PI_1, PI_2).

4. The assembly according to at least one of the preceding claims, **characterised in that** the common actuation unit (15') for the subassembly (12) of the vehicle components (2, 7, 8, 9, 11) involved in a hood movement and the subassembly (20) of the vehicle components (23, 27, 35) serving to actively reduce vehicle body vibrations is linked with both subassemblies (12, 20) via an OR circuit.

5. The assembly according to at least one of the preceding claims, **characterised in that** the common actuation unit (15') for the subassembly (12) of the vehicle components (2, 7, 8, 9, 11) involved in a hood movement and the subassembly (20) of the vehicle components (23, 27, 35) serving to actively reduce vehicle body vibrations comprises a combined electronic control device (16') assigned to both subassemblies (12, 20).

6. The assembly according to at least one of the preceding claims, **characterised in that** the vehicle components (23, 27, 35) serving to actively reduce vehicle body vibrations comprise at least one torsion stabilizer (23) which connects two body parts of the convertible vehicle (1) with each other, which torsion stabilizer (23) is actively operated by the actuation unit (15') to change its length between its connecting points to the vehicle body in order to suppress torsions of the vehicle body, said torsion stabilizer (23) preferably comprising a hydraulic actuator (27) which, in the base state of the convertible vehicle (1), is loaded with hydraulic medium to such an extent that a tensile preload is present between its connecting points, which tensile preload can be decreased or increased for active torsion suppression, and wherein the hydraulic actuator (27) is, in particular, a hose actuator which, upon its interior being loaded with hydraulic medium, expands with respect to its diameter and at the same time shortens between its connecting points.

7. The assembly according to any one of the preceding claims, **characterised in that** the subassembly (12) of the vehicle components (2, 7, 8, 9, 11) involved in a hood movement comprises at least one hood (2) which is displaceable between an end position, in which the hood (2) covers a passenger compartment (3) and rests against a windscreen boundary (4), and an end position in which the hood (2) is stowed in a rear stowage area, said hood (2) comprising roof frame profiles (8) and a hood linkage system (9), which is articulated to the vehicle body via a main bearing (11), as well as, preferably, a hood compartment cover (VDKD).

## Revendications

1. Ensemble comportant différents sous-ensembles (12, 20) d'un véhicule cabriolet (1), ledit ensemble comprenant un système d'actionnement pour leur actionnement, ce système comprenant au moins une unité d'actionnement électrique, dans lequel ensemble des composants de véhicule (2, 7, 8, 9, 11) impliqués dans un déplacement de la capote constituent un sous-ensemble (12) et des composants de véhicule (23, 27, 35) destinés à réduire activement des oscillations de la carrosserie constituent un autre sous-ensemble (20), **caractérisé en ce que** ladite au moins une unité d'actionnement électrique (15') est associée avec les différents sous-ensembles, et
**en ce que** le sous-ensemble (12) des composants de véhicule (2, 7, 8, 9, 11) impliqués dans un déplacement de la capote et le sous-ensemble (20) des composants de véhicule (23, 27, 35) destinés à réduire activement des oscillations de la carrosserie peuvent être actionnés ensemble par ladite au moins une unité d'actionnement électrique (15').

2. Ensemble selon la revendication 1, **caractérisé en ce que** le sous-ensemble (12) des composants de véhicule (2, 7, 8, 9, 11) impliqués dans un déplacement de la capote peut être actionné par une unité d'actionnement électrique (15') comprenant un dispositif de commande (16') qui commande des actionneurs électriques (A_HL_1, A_VDKD_1) de manière électronique.

3. Ensemble selon l'une quelconque des revendications précédentes, notamment selon la revendication 2, **caractérisé en ce que** le sous-ensemble (20) des composants de véhicule destinés à réduire activement des oscillations de la carrosserie peut être actionné par une unité d'actionnement électrique (15') comprenant un dispositif de commande (16') qui commande des actionneurs électriques (PI_1, PI_2), notamment des actionneurs piézoélectriques (PI_1, PI_2), de manière électronique.

4. Ensemble selon au moins une des revendications précédentes, **caractérisé en ce que** l'unité d'actionnement commune (15') pour le sous-ensemble (12) des composants de véhicule (2, 7, 8, 9, 11) impliqués dans un déplacement de la capote et le sous-ensemble (20) des composants de véhicule (23, 27, 35) destinés à réduire activement des oscillations de la carrosserie est reliée à tous les deux sous-ensembles (12, 20) par un circuit OU.

5. Ensemble selon au moins une des revendications précédentes, **caractérisé en ce que** l'unité d'actionnement commune (15') pour le sous-ensemble (12) des composants de véhicule (2, 7, 8, 9, 11) impliqués dans un déplacement de la capote et le sous-ensemble (20) des composants de véhicule (23, 27, 35) destinés à réduire activement des oscillations de la carrosserie comprend un dispositif de commande électronique combiné (16') qui est associé à tous les deux sous-ensembles (12, 20).

6. Ensemble selon au moins une des revendications précédentes, **caractérisé en ce que** les composants de véhicule (23, 27, 35) destinés à réduire activement des oscillations de la carrosserie comprennent au moins un stabilisateur de torsion (23) reliant entre elles deux parties de la carrosserie du véhicule cabriolet (1), qui est commandé activement, en vue de variations de sa longueur entre ses points d'attache à la carrosserie, par l'unité d'actionnement (15') pour supprimer des torsions de la carrosserie, ledit stabilisateur de torsion (23) comprenant de préférence un actionneur hydraulique (27) qui, dans l'état de base du véhicule cabriolet (1), reçoit un fluide hydraulique jusqu'à ce qu'il existe une précontrainte de traction entre ses points d'attache, laquelle peut être réduite et accrue afin de supprimer activement les torsions, ledit actionneur hydraulique (27) étant notamment réalisé sous la forme d'un actionneur à tuyau qui, lorsque son volume intérieur reçoit un fluide hydraulique, s'élargit dans son diamètre et se raccourcit en même temps entre ses points d'attache.

7. Ensemble selon l'une quelconque des revendications précédentes, **caractérisé en ce que** le sous-ensemble (12) des composants de véhicule (2, 7, 8, 9, 11) impliqués dans un déplacement de la capote comprend au moins une capote (2) qui est déplaçable entre une position d'extrémité dans laquelle la capote (2) couvre un habitacle (3) et prend appui sur une limite de pare-brise (4), et une position d'extrémité dans laquelle la capote (2) est rangée dans un espace de rangement arrière, ladite capote (2) comprenant des profilés de cadre de toit (8) et une tringlerie de capote (9) articulée sur la carrosserie au moyen d'un palier principal (11), ainsi que, de préférence, un couvercle d'un compartiment de capote (VDKD).
